# EUROPÄISCHE PATENTANMELDUNG

(11) **EP 1 344 624 A1**
(43) Veröffentlichungstag der Anmeldung: **17.09.2003**
(21) Anmeldenummer: 03005620.4
(22) Anmeldetag: 12.03.2003
(51) Int. Cl.: B29C 45/50, G01L 1/22, B29C 45/77

(54) **Druckmesseinrichtung für eine Spritzgiessmaschine**

(30) Priorität: 13.03.2002 DE 10210923
(71) Anmelder: Demag Ergotech GmbH, 90571 Schwaig (DE); L&T-Demag Plastics Machinery Private Limited, Chennai-600 089 (IN)
(72) Erfinder: Harish, Kittappa Gowda, 600 031 Chennai (IN); Ickinger, Georg Michael, 8010 Graz (AT); Saju, Mangalasseril, 600 020 Chennai (IN); Sivakumar, Shanmugham, 600 044 Chennai (IN); Vivek Anand, Sukumaran, 600 73 Chennai (IN); Kumar, Mathrubootmam, 600 091 Chennai (IN)
(74) Vertreter: Wilhelm, Ludwig, Dipl.-Phys.

(57) **Zusammenfassung**

Vorgestellt wird eine Druckmesseinrichtung, welche zwischen der Plastifizierschnecke und einem diese in Axialrichtung betätigenden Hubantrieb einer Spritzgießmaschine angeordnet ist und ein unter der axialen Krafteinwirkung des Hubantriebs elastisch verformbares Kraftübertragungsglied (8) aufweist, welches mit örtlich vorspringenden, wechselweise gegensinnig gerichteten Auflagern (8.1 und 8.2) sowie mit einem die Biegeverformung in einem biegeäußeren Randbereich zwischen zwei Auflagern des Kraftübertragungsglieds zur Ermittlung des Einspritzdrucks elektrisch oder optoelektrisch messenden Sensorelement (9) versehen ist.

## Beschreibung

Die Erfindung betrifft eine Druckmesseinrichtung für eine Spritzgießmaschine, mit einem der Plastifiziereinheit zugeordneten Hubantrieb und einem mit der Antriebskraft des Hubantriebs axialkraftbeaufschlagten und unter der axialen Krafteinwirkung des Hubantriebs elastisch verformten Kraftübertragungsglied sowie einem die Verformung des Kraftübertragungsglieds messenden Verformungssensor.

Aus der EP 0 350 872 B1 ist es bekannt, den Druck, mit welchem eine Spritzmasse in eine Spritzgießform gepresst wird, durch Messung der Kraft auf die Plastifizierschnecke während der Einspritzphase zu messen. Hierzu wird zwischen der Plastifizierschnecke und dem zugeordneten Hubantrieb eine nicht näher beschriebene Kraftmesszelle (Lastdetektor) angebracht und damit die Hubkraft gemessen.

Bei den aus der US-A 4 961 696 und der US-A 5 206 034 bekannten Druckmesseinrichtungen der eingangs genannten Art ist zur Druckkraftmessung ein elastisch verformbares Kraftübertragungsglied vorgesehen, welches aus zwei konzentrischen, gegensinnig zueinander einerseits vom Hubantrieb und andrerseits von Seiten der Plastifizierschnecke axialkraftbeaufschlagten, durch einen schmalen Ringspalt voneinander beabstandeten Druckstücken besteht, die durch eine den Ringspalt zwischen den Druckstücken überbrückende und randseitig an diesen fest eingespannte Biegeplatte einstückig miteinander verbunden sind, wobei die Verformung der Biegeplatte durch einen oder mehrere, sich radial vom Außen- zum Innenrand der Biegeplatte erstreckende Dehnungsmessstreifen (DMS) gemessen wird. Dabei entstehen jedoch unter Last, bezogen auf die effektiven Verformungen im Bereich der Dehnungsmessstreifen, hohe Spannungskonzentrationen an den Einspannstellen der Biegeplatte, so dass diese bekannten Druckmesseinrichtungen den heutigen Anforderungen an Präzision und Zuverlässigkeit in der Spritzgießtechnik nicht genügen.

Es ist daher Aufgabe der vorliegenden Erfindung, eine Druckmesseinrichtung für eine Spritzgießmaschine zu schaffen, welche trotz der hohen mechanischen und/oder thermischen Belastungen in einem vorgegebenen Messbereich eine deutlich höhere Präzision aufweist als die bisher bekannte Einrichtungen.

Diese Aufgabe wird durch eine Druckmesseinrichtung nach den Merkmalen des Patentanspruchs 1 gelöst. Hierbei ist das elastisch verformbare Kraftübertragungsglied, welches in den Kraftweg zwischen dem Hubantrieb und der Plastifiziereinheit, und zwar vorzugsweise der Plastifizierschnecke, eingefügt wird, dergestalt ausgebildet, dass es die von dem Hubantrieb ausgeübte Druck- bzw. Schubkraft nach Art eines beidseitig über freie Auflager abgestützten Biegeträgers in eine Biegeverformung umsetzt. Diese Biegeverformung wird in einer von der neutralen Biegelinie entfernten Randzone zwischen den Auflagerstellen des Kraftübertragungsglieds durch eine an sich bekannte Methode, zum Beispiel mittels eines Dehnungsmessstreifens gemessen. Auf diese Weise kann der vorgegebene Messbereich gespreizt und damit die Messgenauigkeit dem gewünschten Zweck angepasst werden, und selbst bei einem Versagensbruch des Kraftübertragungsglieds geht zwar die Druckmess-, nicht aber die Kraftübertragungsfunktion der Druckmesseinrichtung verloren.

Im einfachsten Fall kann das Kraftübertragungsglied als Biegebalken ausgebildet und an einem nicht drehenden, kraftübertragenden Teil des Hubantriebs angeordnet sein. Bei einem als Spindelgetriebe ausgebildeten Hubantrieb ergibt sich eine vorteilhafte Kraftübertragung und Druckmessung dadurch, dass das Kraftübertragungsglied an einer Stirnfläche der nicht-drehenden Spindelmutter radialsymmetrisch zur Drehachse der Spindelwelle angeordnet ist.

Besonders vorteilhaft ist es, wenn das Kraftübertragungsglied als kreisringförmiges Federelement ausgebildet ist, dessen Stirnflächen jeweils mindestens zwei gleichmäßig über den Umfang verteilte, sockelförmige Auflager aufweisen, wobei die Auflager einer Stirnfläche gegenüber denen der anderen Stirnfläche in Umfangsrichtung versetzt angeordnet sind. Bei einem axialen Druck auf die Auflager verbiegt sich das Federelement wellenförmig, was zu einer großen elastischen Verformung der biegeinneren und -äußeren Randzonen führt, welche durch dort angebrachte Dehnungsmessstreifen gemessen wird. Aufgrund der hohen Temperaturen bei Spritzgießmaschinen im Bereich des Hubantriebs und der Plastifizierschnecke können hier Dehnungsmessstreifen mit faseroptischen Geberelementen vorteilhaft sein.

Die Erfindung wird im folgenden anhand eines in den Figuren teilweise schematisch dargestellten Ausführungsbeispieles näher beschrieben. Es zeigen:
- **Fig. 1**: einen Querschnitt durch den Hubantrieb einer Spritzgießmaschine mit Druckmesseinrichtung; und
- **Fig. 2**: ein kreiszylindrisches Kraftübertragungsglied zur Druckmessung.

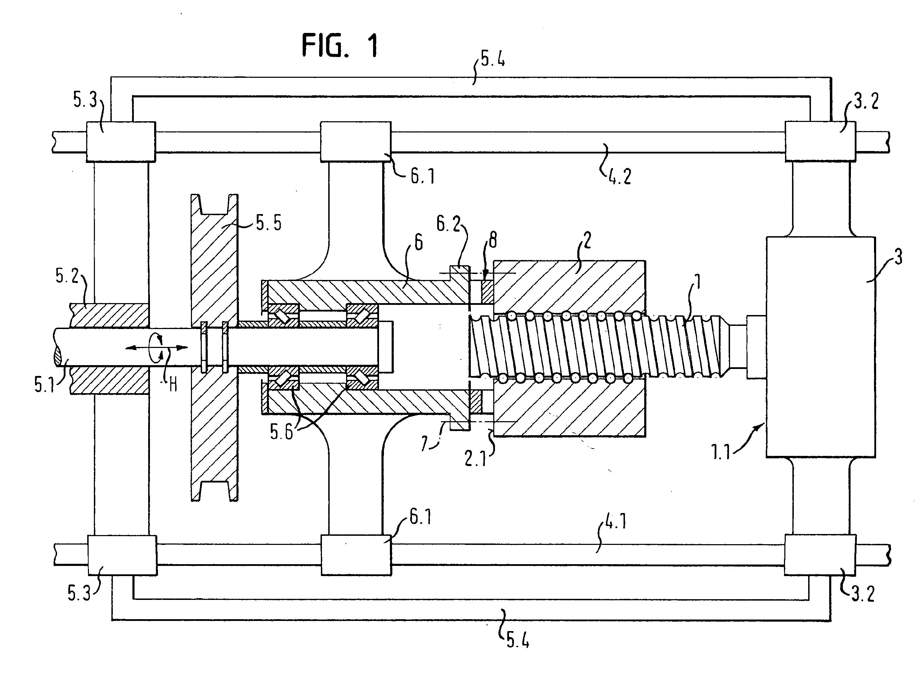

Der in Fig. 1 dargestellte Hubantrieb für eine Spritzgießmaschine enthält ein aus einer Spindelwelle 1 und einer Spindelmutter 2 bestehendes Spindelgetriebe, dessen Spindelwelle 1 durch einen elektrischen Rotationsmotor 1.1 in beide Richtungen in Drehung versetzt werden kann, dabei jedoch gegenüber dem Rotationsmotor 1.1 axial unverschieblich ist. Das Gehäuse 3 des Rotationsmotors 1.1 ist mit Führungshülsen 3.2 gleitend an zwei parallelen, stationären Führungsstangen 4.1 und 4.2 gelagert. Die Plastifizierschnecke 5.1, welche in einem beheizbaren, über Führungshülsen 5.3 ebenfalls an den Führungsstangen 4.1, 4.2 verschieblich gelagerten und über Rahmenteile 5.4 bewegungsfest mit dem Motorgehäuse 3 verkoppelten Plastifizierzylinder 5.2 über eine Riemenscheibe 5.5 drehbar angetrieben wird und dadurch das Spritzgut, also zum Beispiel eine Kunststoffmasse, zum düsenseitigen Ende des Plastfizierzylinders 5.2 hin fördert und anschließend durch eine Axialbewegung in eine Form einspritzt, ist an ihrem rückwärtigen Ende über einen Lagersatz 5.6 drehbar, jedoch hubfest in einem Druckgehäuse 6 gelagert, welches mittels Führungshülsen 6.1 gleichfalls an den Führungsstangen 4.1 und 4.2 axial verschiebbar abgestützt ist. Das Druckgehäuse 6 weist auf der zur Spindelmutter 2 gerichteten Seite einen Flansch 6.2 auf und ist dort über Schaubverbindungen 7, welche in den dafür vorgesehenen Bohrungen des Flansches 6.2 ein axiales Spiel haben, mit der Stirnfläche 2.1 der Spindelmutter 2 verbunden. Über das Druckgehäuse 6 ist die Spindelmutter 2 somit drehfest geführt und bei einer Drehung der Spindelwelle 1 in Schneckenhubrichtung H angetrieben.

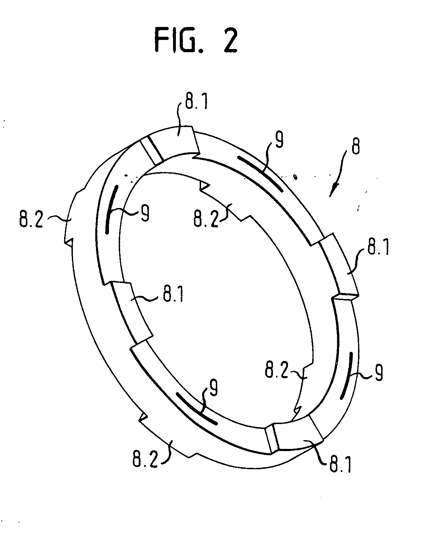

Zur Messung der axialen Druckkraft zwischen der Spindelmutter 2 und dem Flansch 6.2 bzw. der Plastifizierschnecke 5.1 ist in dem Spalt zwischen der Stirnfläche 2.1 und dem Flansch 6.2 ein speziell geformter Federring 8 angeordnet, der in Fig. 2 perspektivisch dargestellt und im folgenden beschrieben wird. Der Federring 8 ist zylindrisch geformt und weist auf beiden Stirnflächen gleichmäßig über den Umfang verteilte sockelförmige Auflager 8.1 bzw. 8.2 auf, wobei die Auflager 8.1 einer Seite gegenüber den Auflagern 8.2 der anderen Seite versetzt angeordnet sind. Bei einer axialen Druckkraft auf diese Auflager 8.1, 8,2, wie sie z.B. beim Vorschub der Spindelmutter 2 auf das Druckgehäuse 6 ausgeübt wird, verbiegt sich der Federring 8 wellenförmig, wobei die innere und äußere Stirnflächen eine erhebliche Verformung erfahren. An den Stellen der größten Verformung sind Dehnungsmessstreifen 9 aufgebracht, über die die Verformung elektrisch oder, bei Verwendung von faseroptischen Gebern, optoelektrisch gemessen wird. Mit diesen Messwerten kann der Hubantrieb für die Plastifizierschnecke 5.1 sehr exakt gesteuert bzw. geregelt werden. Der Federring 8 ist hinsichtlich seiner Steifigkeit so dimensioniert, dass bei der Höhe der Auflager 8.1, 8.2 und der vorgesehenen maximalen Druckkraft der Bereich der elastischen Verformung nicht verlassen wird, der Federring 8 also nicht bis zum Anschlag durchgedrückt wird. Es sollten mindestens zwei Auflager auf jeder Seiten des Federringes 8 vorhanden sein; jedoch lassen sich mit einer größeren Auflageranzahl und entsprechender Anzahl von Dehnungsmessstreifen 9 Messfehler durch Asymmetrien in dem Hubantrieb leichter eliminieren. Über die Schraubverbindungen 7 werden sowohl eine definierte Vorspannung auf den Federring 8 eingestellt als auch außeraxiale Kräfte, bedingt durch Fertigungsungenauigkeiten, korrigiert.

## Patentansprüche

1. Druckmesseinrichtung für eine Spritzgießmaschine, mit einem der Plastifiziereinheit zugeordneten Hubantrieb und einem mit der Antriebskraft des Hubantriebs axialkraftbeaufschlagten und unter der axialen Krafteinwirkung des Hubantriebs elastisch verformten Kraftübertragungsglied sowie einem die Verformung des Kraftübertragungsglieds messenden Verformungssensor, **dadurch gekennzeichnet, dass**
das Kraftübertragungsglied (8) sowohl auf Seiten des Hubantriebs (1, 2) als auch auf Seiten der Plastifiziereinheit (5.1, 5.2) über örtlich vorspringende, wechselseitig zueinander versetzte Auflagerstellen (8.1, 8.2) axialkraftbeaufschlagt ist und der Verformungssensor zumindest ein die Biegeverformung in einem von der neutralen Biegelinie entfernten Randbereich zwischen zwei gleichsinnig kraftbeaufschlagten Auflagerstellen (8.1 bzw. 8.2) des Kraftübertragungsglieds messendes Sensorelement (9) enthält.

2. Druckmesseinrichtung nach Anspruch 1, **dadurch gekennzeichnet, dass**
das Kraftübertragungsglied (8) zwischen der Platifizierschnecke (5.1) der Plastifiziereinheit (5.1, 5.2) und dem zugehörigen Hubantrieb (1, 2) angeordnet und dem Einspritzdruck entsprechend biegeverformt ist.

3. Druckmesseinrichtung nach Anspruch 1 oder 2, **dadurch gekennzeichnet, dass**
das Kraftübertragungsglied (8) an einer Stirnfläche (2.2) der nicht-drehenden Spindelmutter (2) eines als Spindelantrieb ausgebildeten Hubantriebs (1, 2) radialsymmetrisch zu dessen Drehachse angeordnet ist.

4. Druckmesseinrichtung nach einem der vorhergehenden Ansprüche, **dadurch gekennzeichnet, dass**
das Kraftübertragungsglied als kreisringförmiges Federelement (8) ausgebildet ist, dessen Stirnflächen jeweils mindestens zwei gleichmäßig über den Umfang verteilte, sockelförmige Auflagerstellen (8.1, 8.2) aufweisen, wobei die Auflagerstellen (8.1) einer Stirnfläche gegenüber den Auflagerstellen (8.2) der anderen Stirnfläche in Umfangsrichtung versetzt angeordnet sind derart, dass sich das Federelement (8) bei einer axialen Druckkraft auf die Auflagerstellen (8.1, 8.2) wellenförmig verformt, und dass auf zumindest einem biegeäußeren Randbereich des Federelements (8) ein Sensorelement in Form eines Dehnungsmessstreifens (9) angeordnet ist.

5. Druckmesseinrichtung nach einem der vorhergehenden Ansprüche, **dadurch gekennzeichnet, dass**
das Sensorelement (9) ein faseroptisches Geberelement aufweist.
